# EUROPEAN PATENT SPECIFICATION

(11) **EP 2 408 601 B1**
(45) Date of publication and mention of the grant of the patent: **23.12.2015**
(21) Application number: 10714214.3
(22) Date of filing: 17.03.2010
(51) Int. Cl.: B27K 3/02, B27K 3/26, E02B 3/24, A01N 25/34, A01N 59/16

(54) **IMMERSED WOOD PROTECTION METHOD AND SYSTEM**
VERFAHREN UND SYSTEM ZUM SCHUTZ VON EINGETAUCHTEM HOLZ
PROCÉDÉ ET SYSTÈME DE PROTECTION DE BOIS IMMERGÉ

(30) Priority: 17.03.2009 US 202603 P
(43) Date of publication of application: 25.01.2012
(73) Proprietor: Castagna, Sandro, 30121 Venezia (IT)
(72) Inventor: Castagna, Sandro, 30121 Venezia (IT)
(86) International application number: PCT/EP2010/053475
(87) International publication number: WO 2010/106108

(56) References cited:
- WO-A2-2005/115704
- BJORDAL ET AL: "Preservation, storage and display of waterlogged wood and wrecks in an aquarium: ''Project Aquarius''", JOURNAL OF ARCHAEOLOGICAL SCIENCE, ACADEMIC PRESS, NEW YORK, NY, US, vol. 34, no. 7, 27 March 2007 (2007-03-27) , pages 1169-1177, XP005938066, ISSN: 0305-4403, DOI: DOI:10.1016/J.JAS.2006.10.011

## Description

### FIELD

The present invention generally relates to protection of an immersed wooden piece. More specifically, the present invention is concerned with a method for mitigating degradation of a wooden piece immersed in water caused by the presence of microorganisms in the water, and the corresponding wooden piece.

### BACKGROUND

Wooden posts are widely used to support structures located above water level, for example above a lake, a lagoon or sea. Such structures include, for examples, quays, piers, boardwalks and buildings. In operation, a portion of the wooden posts is immersed in water and is prone to degradation due to the action of the microorganisms present in the water.

Nails driven into water-exposed wooden surfaces have been used, as early as the 1400s in Venice, as a technique for maintaining or safeguarding wooden ships, such as commercial sailing ships, by restricting damages made by marine microorganisms to wood. The technique was probably imported to Venice from northern countries, such as Flanders, as a result of commercial exchanges between them. However, the technique had remained confined to the art of naval architecture.

In 1952, research has been conducted in Denmark for reproducing the above mentioned technique in order to get an insight as to its mechanisms of operation. However, this research has been confined to shipbuilding and harbor constructions.

Nevertheless, there still exists a need for a method for mitigating the action of microorganisms on wooden material immersed in water, which is reproducible and operable to extend the durability of such immersed wooden material.

### SUMMARY

According to the present invention, there is provided a method for mitigating degradation of a wooden piece immersed in water according to present claim 1.

The present invention also relates to a wooden piece for immersion in water as defined in present claims 7-8.

The foregoing and other objects, advantages and features of the present invention will become more apparent upon reading of the following non-restrictive description of illustrative embodiments thereof, given by way of example only with reference to the accompanying drawings.

### BRIEF DESCRIPTION OF THE DRAWINGS

In the appended drawings:

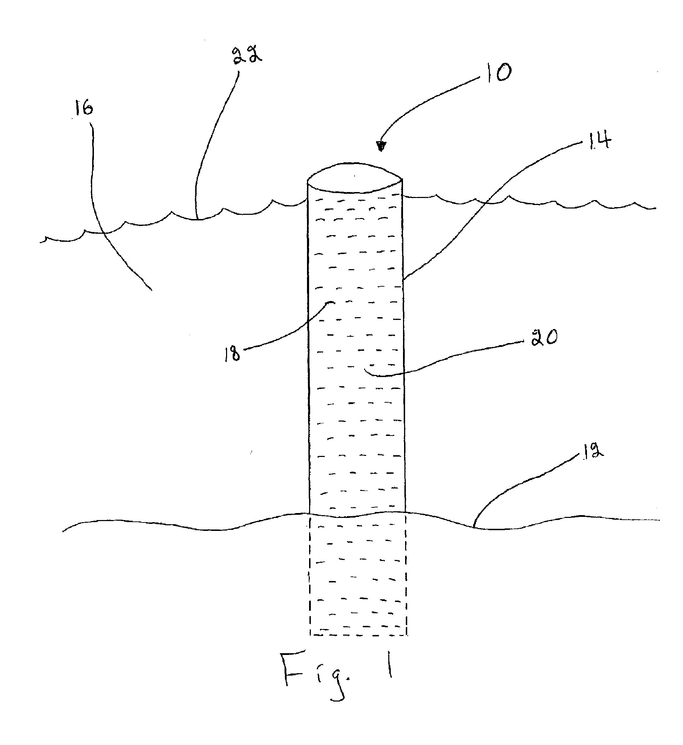

Figure 1 is a front elevational view of a wooden piece immersed in water, with staples driven in a water-exposed surface of the wooden piece and with the staples lying in an horizontal plane; Figure 1A is a front elevational view of a wooden piece immersed in water, with staples driven in a water-exposed surface of the wooden piece and with the staples lying in a vertical plane; Figure 1B is a front elevational view of a wooden piece immersed in water, with staples driven in a water-exposed surface of the wooden piece and with the staples lying in a plane inclined with respect to the horizontal;

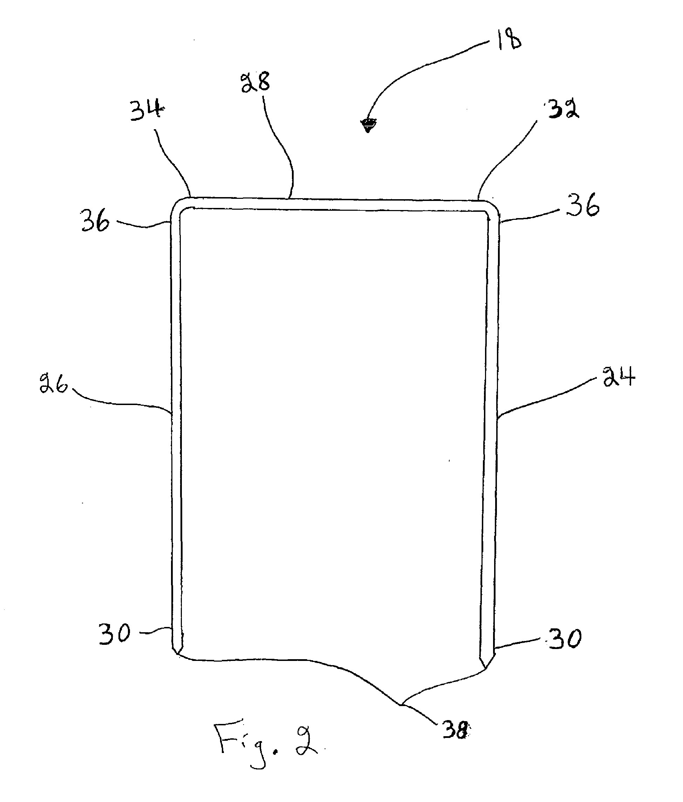

Figure 2 is an example of staple that can be driven into the wooden piece as illustrated in Figures 1, 1A and 1B;

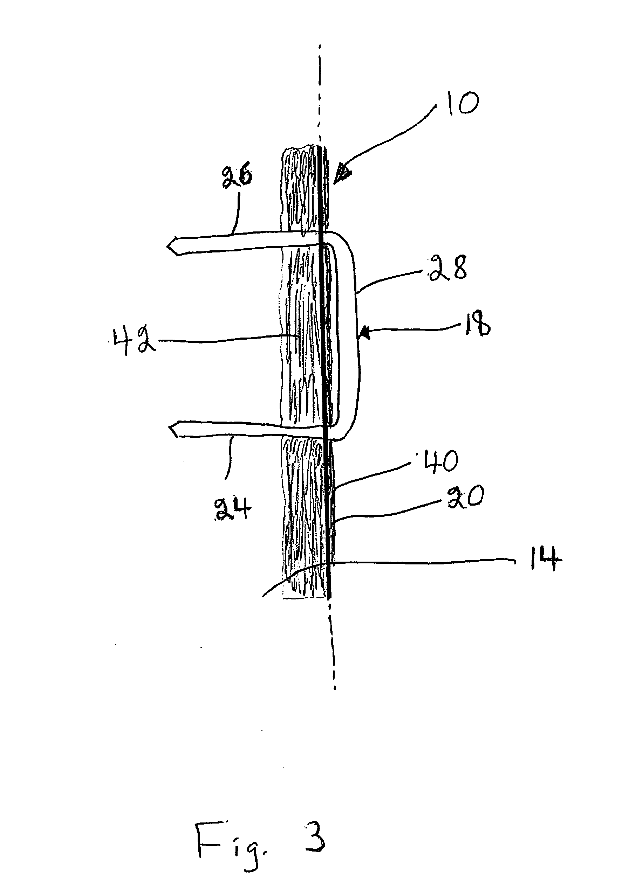

Figure 3 is a sectional view of the wooden piece of Figures 1, 1A and 1B with a staple driven therein, the staple being surrounded by a ferrous oxide protective barrier;

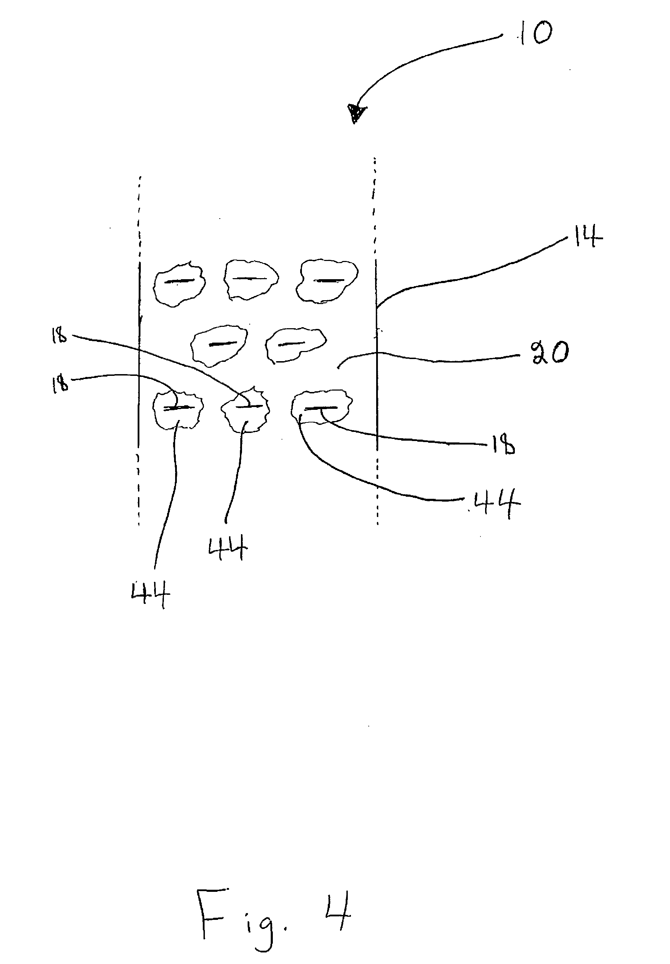

Figure 4 is a front elevational view of an immersed portion of a wooden piece, with a plurality of staples driven in the water-exposed surface thereof, wherein the staples lie in an horizontal plane and wherein each staple has a ferrous oxide ring around it; Figure 4A is a front elevational view of an immersed portion of a wooden piece, with a plurality of staples driven in the water-exposed surface thereof, wherein the staples lie in a vertical plane and wherein each staple has a ferrous oxide ring around it; Figure 4B is a front elevational view of an immersed portion of a wooden piece, with a plurality of staples driven in the water-exposed surface thereof, wherein the staples lie in a plane inclined with respect to the horizontal and wherein each staple has a ferrous oxide ring around it;

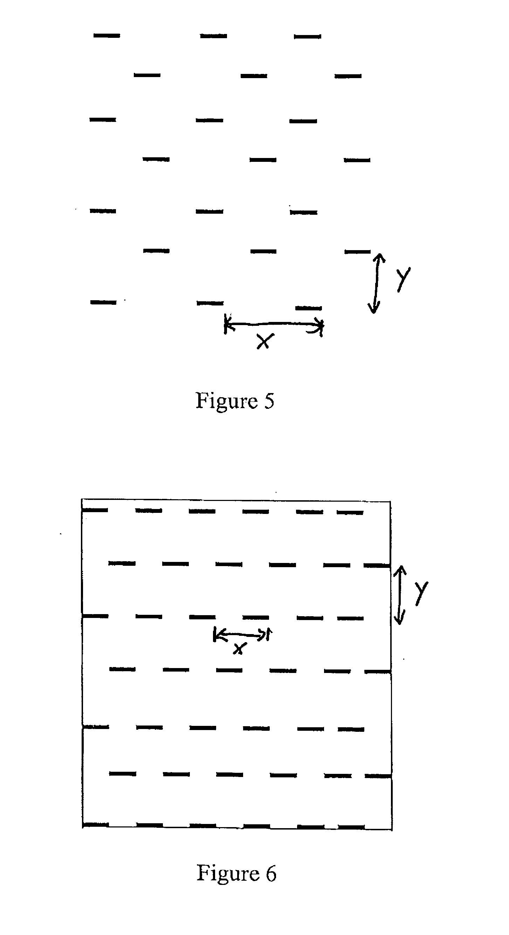

Figure 5 schematically illustrates a first example of distribution of staples for protection of a wooden post having a diameter of 250 mm, wherein the staples lie in an horizontal plane; Figure 5A schematically illustrates the first example of distribution of staples for protection of a wooden post having a diameter of 250 mm, wherein the staples lie in a vertical plane; Figure 5B schematically illustrates the first example of distribution of staples for protection of a wooden post having a diameter of 250 mm, wherein the staples lie in a plane inclined with respect to the horizontal;
Figure 6 schematically illustrates a second example of distribution of staples in a wooden post for use in the construction of a dock and having a diameter ranging from about 250 to about 300 mm, wherein the staples lie in a horizontal plane; Figure 6A schematically illustrates the second example of distribution of staples in a wooden post for use in the construction of a dock and having a diameter ranging from about 250 to about 300 mm, wherein the staples lie in a vertical plane; Figure 6B schematically illustrates the second example of distribution of staples in a wooden post for use in the construction of a dock and having a diameter ranging from about 250 to about 300 mm, wherein the staples lie in a plane inclined with respect to the horizontal;

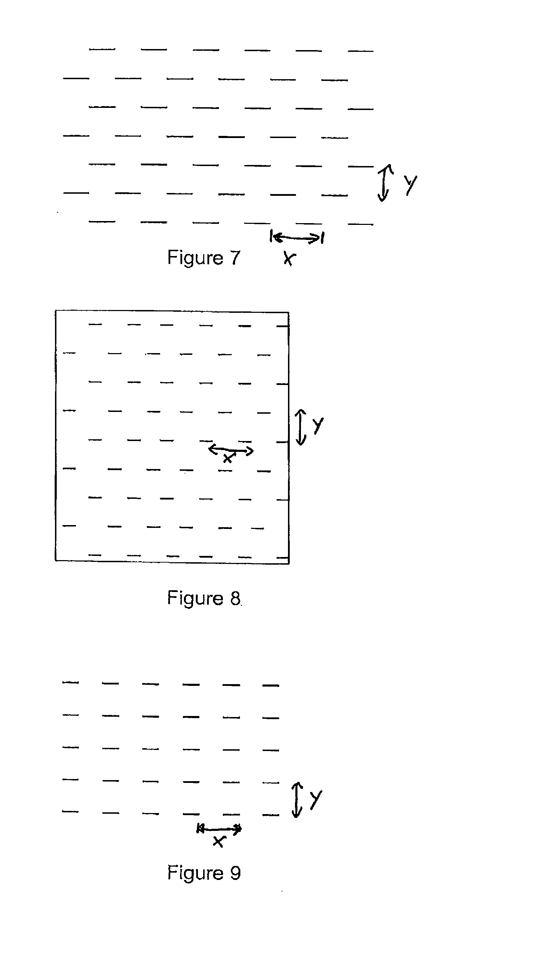

Figure 7 schematically illustrates a third example of distribution of staples in a wooden post for use in supporting a signal and having a diameter ranging from about 350 to about 400 mm, wherein the staples lie in a horizontal plane; Figure 7A schematically illustrates the third example of distribution of staples in a wooden post for use in supporting a signal and having a diameter ranging from about 350 to about 400 mm, wherein the staples lie in a vertical plane; Figure 7B schematically illustrates the third example of distribution of staples in a wooden post for use in supporting a signal and having a diameter ranging from about 350 to about 400 mm, wherein the staples lie in plane inclined with respect to the horizontal;
Figure 8 schematically illustrates a fourth example of distribution of staples in a wooden post for use in supporting a signal having a diameter ranging from about 350 to about 400 mm, wherein the staples lie in a horizontal plane; Figure 8A schematically illustrates the fourth example of distribution of staples in a wooden post for use in supporting a signal having a diameter ranging from about 350 to about 400 mm, wherein the staples lie in a vertical plane; Figure 8B schematically illustrates the fourth example of distribution of staples in a wooden post for use in supporting a signal having a diameter ranging from about 350 to about 400 mm, wherein the staples lie in a plane inclined with respect to the horizontal; and
Figure 9 schematically illustrates a fifth example of distribution of staples in a wooden post for use in supporting a signal having a diameter ranging from about 350 to about 400 mm, wherein the staples lie in a horizontal plane; Figure 9A schematically illustrates the fifth example of distribution of staples in a wooden post for use in supporting a signal having a diameter ranging from about 350 to about 400 mm, wherein the staples lie in a vertical plane; Figure 9B schematically illustrates the fifth example of distribution of staples in a wooden post for use in supporting a signal having a diameter ranging from about 350 to about 400 mm, wherein the staples lie in a plane inclined with respect to the horizontal.

### DETAILED DESCRIPTION

A method and system for mitigating degradation of a wooden piece immersed in water according to the non-restrictive illustrative embodiments will now be described.

More specifically, these non-restrictive illustrative embodiments are concerned with a method and system for mitigating the degradation of a wooden piece immersed in water, wherein the degradation is caused by the presence of microorganisms in the water. Staples at least partially made of iron are driven into a surface of the wooden piece exposed to water and on which the action of microorganisms needs to be mitigated. As the iron of the staples reacts with water to produce ferrous oxide (FeO), rings of oxidation form around the staples and, with time, the rings overlap with one another so as to form a homogenous protective barrier on and underneath the water-exposed surface over a certain thickness of the wooden piece. The protective barrier operates as a result of the microorganisms being unable to metabolize ferrous oxide.

Referring now to Figures 1, 1A and 1B, a wooden post 10 is driven into the soil 12 at the bottom of a body of water 16. Although the non-restrictive, illustrative embodiments are described herein in relation to a wooden post, it should be kept in mind that the present invention applies to other types of wooden pieces as well.

The wooden post 10 has a portion 14 that is immersed in water 16, below a water line 22. Due to the presence in water 16 of marine microorganisms (not shown) such as Teredo, Bankia, Limnoria and Celuria, for example, the portion 14 of the wooden post 10 degrades relatively slowly. More specifically, the above-mentioned and/or other marine microorganisms attack the wood of the portion 14 and cause a loss of structural integrity of the wood. For example, a 35 to 40 cm (about 12 to 14 inches) diameter piece of "Querqus querqus" or similar equivalent American wood species such as Douglas Fir and Southern Pine, degrade in 1 to 4 years in the Carabean sea; in 2 to 5 years in the Meditarean sea; in 4 to 6 years in the Baltic sea or in the Atlantic ocean; and in 2 to 5 years in the Lagoon of Venice.

In order to mitigate the degradation of the portion 14 of the wooden post 10 immersed in water 16, a large number of staples such as 18 are driven into a water-exposed surface 20 of the wooden post 10. Each staple 18 is driven into the post 10 so that a portion of the staple 18 is exposed to the water 16 at the surface 20 of the wooden post 10. The distribution of the staples 18 on the water-exposed surface 20 of the wooden post 10 will be described in more detail in the following description.

Turning now to Figure 2, a staple 18 will now be described. The staple 18 comprises three integral elements: a first prong 24, a second prong 26, and a linking member 28. The linking member 28 has a first 32 and a second 34 opposite ends. The first 24 and second 26 prongs each have a proximal end 36 and a distal end 30.

The proximal end 36 of the first prong 24 is connected to the first end 32 of the linking member 28 while the proximal end 36 of the second prong 26 is connected to the second end 34 of the linking member 28. As shown in Figure 2, the first and second prongs 24 and 26 are substantially parallel to each other, and substantially perpendicular to the linking member 28. Typically, the distal ends 30 of the first and second prongs 24 and 26 are terminated by needle-like points 38 to facilitate penetration of the staple 18 into the wooden post 10. Figure 3 illustrates the staple 18 with its first and second prongs 24 and 26 driven into the wooden post 10, with the linking member 28 exposed at the surface 20 of the wooden post 10.

The staple 18 comprises iron (Fe) so that it oxides in contact with water to produce iron(II) oxide (FeO), also known as ferrous oxide. Microorganisms present in the water 16 degrade the wood of the wooden post 10, for example by metabolizing an enzyme of the cellulose contained in the wood. In general, marine microorganisms cannot metabolize ferrous oxide. As the plurality of staples 18 driven into the water-exposed surface 20 of the wooden post 10 oxide, rings 44 of ferrous oxide are produced around the staples (Figures 4, 4A and 4B). Given sufficient time and provided that certain requirements (described herein below) are met relative to the length of the staples 18, more specifically the length of the prongs 24 and 26, and an homogeneous density of the staples 18 on the water-exposed surface 20, the rings 44 will expand to overlap each other so as to form a ferrous oxide protective barrier 40 on and underneath the water-exposed surface 20 over a certain thickness 42 into the wooden post 10. (Figure 3). In fact, the ferrous oxide is at least partially absorbed into the wooden fibers.

Advantageously, ferrous oxide is not toxic for human health or marine ecology in general. Accordingly, the ferrous oxide protective barrier 40 forms a non-toxic, ecologic defense for wooden material against marine microorganisms.

In order for the ferrous oxide protective barrier 40 to form efficiently on and underneath the water-exposed surface 20 of the wooden post 10, the length of the prongs 24 and 26 (and therefore the deepness of driving of the staples 18 in the wooden piece 10), and an homogeneous density of staples 18 driven through the water-exposed surface 20 of the wooden post 10 will advantageously meet the requirements indicated in the table below.

**Post with a circular section**

| **Post diameter (cm)** | **staples shaft length (mm)** | **Density of staples (staples/m²⁾** | **Duration (years)** |
|---|---|---|---|
| 18 to 20 | 25 | 2 100 to 4 200 | 5 to 12 |
| 20 to 24 | 30 | 2 100 to 4 200 | 5 to 12 |
| 25 to 28 | 30 | 2 100 to 4 200 | 5 to 12 |
| 28 to 30 | 35 | 2 100 to 4 800 | 5 to 18 |
| 30 to 35 | 35 | 2 100 to 4 800 | 5 to 18 |
| 35 to 38 | 40 | 4 800 to 6 000 | 18 to 30 |
| 38 to 40 | 45 | 4 800 to 6 000 | 18 to 30 |
| 40 to 45 or more | 45 | 4 800 to 6 000 | 18 to 30 |

**Post with a square section**

| **Post side (cm)** | **staples shaft length (mm)** | **Density of staples (staples/m²⁾** | **Duration (years)** |
|---|---|---|---|
| 12 to 14 | 25 | 2 100 to 4 200 | 5 to 15 |
| 14 to 16 | 30 | 2 100 to 4 800 | 5 to 15 |
| 16 to 18 | 35 | 2 100 to 4 800 | 5 to 15 |
| 18 to 20 | 40 | 4 800 to 6 000 | 18 to 30 |
| 20 to 24 | 45 | 4 800 to 6 000 | 18 to 30 |
| 26 to 30 | 45 | 4 800 to 6 000 | 18 to 30 |
| 32 to 36 | 50 | 4 800 to 6 000 | 18 to 30 |
| 38 to 44 or more | 50 | 4 800 to 6 000 | 18 to 30 |

The above table indicates the durability of a wooden post having a portion thereof immersed in water as a function of the following factors:
- The cross sectional dimension(s) of the wooden post;
- The length of the prong(s) of the staples; and
- The density of staples by surface unit of the water-exposed surface of the wooden post.

From the above table, it is noted that the length of the prongs of the staples and the density of staples increase with the cross sectional dimension(s) (diameter or side dimension) in accordance with a certain relation to produce an efficient ferrous oxide barrier 40 protecting the wood against marine microorganisms.

The quality of the wood forming the post constitutes another factor that can influence the durability of the wooden post.

In the illustrative, non-restrictive embodiment, the staples 18 are two-prong staples made, for example, of wire material comprising about 90% iron and having a diameter of about 1.53 mm.

Using the specifications given in the above table:
- About three (3) weeks are required for the rings 44 to form on the water-exposed surface of the wooden post 10; and
- About three (3) months to a year (depending on the wood species) are required for the ferrous oxide protective barrier 40 to form. Thickness 42 can reach a value as high as 10 cm.

A ferrous oxide protective barrier against the action of microorganisms according to the above described non restrictive, illustrative embodiments, can be expected to mitigate degradation of a wooden piece immersed in water for a period of time as long as thirty (30) years, as indicated in the above table.

For example, as indicated by the above table, a wooden post with circular section having a diameter between 35 and 45 cm and a water-exposed surface in which are driven staples with prongs having a length between 40 and 45 mm and with a density of 4800 to 6000 staples per square meter will result in a durability of the wooden post between 18 to 30 years. This demonstrates the efficiency of the method according to the present invention.

Of course, the staples 18 will be advantageously, regularly distributed over the water-exposed surface 20 of the wooden post 10 to form an homogeneous density of staple and therefore produce an homogeneous ferrous oxide protective barrier 40.

As illustrated in Figures 1, 4, 5, 6, 7, 8 and 9, the staples 18 can be driven into the water-exposed surface 20 of the wooden post 10 with their linking members 28 exposed at the surface 29 and extending generally horizontally. As illustrated in Figures 1A, 4A, 5A, 6A, 7A, 8A and 9A, the staples 18 can be driven into the water-exposed surface 20 of the wooden post 10 with their linking members 28 exposed at the surface 20 and extending generally vertically. As illustrated in Figures 1B, 4B, 5B, 6B, 7B, 8B and 9B, the staples 18 can be driven into the water-exposed surface 20 of the wooden post 10 with their linking members 28 exposed at the surface 20 and extending at an inclination with respect to the horizontal. Any orientation of the linking members 28 of the staples 18 on the water-exposed surface 20 of the wooden post 10 will not substantially affect the operation of the method.

Figures 5, 5A and 5B schematically illustrate a first example of distribution of staples on the water-exposed surface of a wooden post having a diameter of 250 mm. The length of the prongs of the staples ranges from about 30 to about 40 mm. The staples are distributed using the following orthogonal spacing values (X, XA, Z) and (Y, YA, L) to form a regular staggered pattern:

| | | |
|---|---|---|
| X = 23.3 mm | XA = 15.5 mm | Z = 23.3 mm |
| Y = 15.5 mm | YA = 23.3 mm | L = 15.5 mm |

Figures 6, 6A and 6B schematically illustrate a second example of distribution of staples on the water-exposed surface of a wooden post used for supporting a dock and having a diameter ranging from about 250 to about 300 mm. The length of the prongs of the staples ranges from about 30 to about 40 mm. The staples are distributed using the following orthogonal spacing values (X, XA, Z) and (Y, YA, L) to form a regular staggered pattern:

| | | |
|---|---|---|
| X = 14.2 mm | XA = 5.7 mm | Z = 14.2 mm |
| Y = 5.7 mm | YA = 14.2 mm | L= 5.7 mm |

Figures 7, 7A and 7B schematically illustrate a third example of distribution of staples on the water-exposed surface of a wooden post used for supporting a signal and having a diameter ranging from about 350 to about 400 mm. The length of the prongs of the staples is about 40 mm long. The staples are distributed using the following orthogonal spacing values (X, XA, Z) and (Y, YA, L) to form a regular staggered pattern:

| | | |
|---|---|---|
| X = 12.5 mm | XA = 5.7 mm | Z = 12.5 mm |
| Y = 5.7 mm | YA = 12.5 mm | L = 5.7 mm |

Figures 8, 8A and 8B schematically illustrate a fourth example of distribution of staples on the water-exposed surface of a wooden post used for supporting a signal and having a diameter ranging from about 350 to about 400 mm. The length of the prongs of the staples is about 40 mm long. The staples are distributed using the following orthogonal spacing values (X, XA, Z) and (Y, YA, L) to form to form a regular staggered pattern:

| | | |
|---|---|---|
| X = 11.1 mm | XA = 5.7 mm | Z = 11.1 mm |
| Y = 5.7 mm | YA = 11.1 mm | L = 5.7 mm |

Figures 9, 9A and 9B schematically illustrate a fifth example of distribution of staples on the water-exposed surface of a wooden post used for supporting a signal and having a diameter ranging from about 350 to about 400 mm. The length of the prongs of the staples is about 40 mm long. The staples are distributed using the following orthogonal spacing values (X, XA, Z) and (Y, YA, L) to form a regular rectangular pattern:

| | | |
|---|---|---|
| X = 10 mm | XA = 5.7 mm | Z = 10 mm |
| Y = 5.7mm | YA = 10mm | L = 5.7mm |

The above described non-restrictive, illustrative embodiments can be modified at will, within the scope of the appended claims. For example, it is possible to consider the use of staples of various dimensions and iron contents, including staples comprising only one prong. In the latter case, the density of staples and/or the diameter of the wire material will be adapted accordingly.

## Claims

1. A method for mitigating degradation of a wooden piece (10) immersed in water, wherein the degradation is caused by the presence of microorganisms in the water, the method comprising:
driving into a surface (20) exposable to water of said wooden piece (10) a large number of staples (18) made of a material comprising iron, said staples having at least one prong (24, 26), and being distributed on said surface with a homogeneous density, whereby
the homogeneous density of staples (18) and the deepness of driving of the staples on said surface (20) in said wood piece (10) are adjusted to produce, by means of a chemical reaction between the water and the iron of the staples (18) when the water immerses said surface, a homogeneous ferrous oxide barrier (44) on and underneath said surface over a certain thickness into the wooden piece to protect the wooden piece against degradation caused by the presence of microorganisms in the water,
**characterized in that**:
i) the homogeneous density of staples (18) on said surface of the wooden post ranges between 2100 and 6000 staples per square meter; and
ii) the deepness of driving of staples (18) on said surface (20) in said wood piece (10) is given by the length of the prongs (24, 26), said length ranging between 25-50 mm.

2. A method as defined in claim 1, wherein the staples are made of wire material comprising 90% iron.

3. A method as defined in claim 1, wherein the staples are made of wire material having a diameter of 1.53 mm.

4. A method as defined in claim 1, wherein:
- said wooden piece (10) is a wooden post with circular cross section having a diameter of at least 18 cm; and
- the staples (18) comprise prongs having a length situated between 25 and 45 mm to adjust accordingly the predetermined deepness of driving of the staples (18) into said wooden piece (10).

5. A method as defined in claim 1 wherein:
- said wooden piece (10) is a wooden post with square cross section having a side dimension of at least 12 cm;
- the staples (18) comprise prongs having a length situated between 25 and 50 mm to adjust accordingly the predetermined deepness of driving of the staples (18) into said wooden piece (10).

6. A method as defined in claim 1, wherein distributing the staples on said surface (20) comprises forming on said surface (20) a regular staggered or regular rectangular pattern of staples.

7. A wooden piece (10) suitable for immersion in water and protected against degradation caused by the presence of microorganisms in the water, comprising a surface (20) exposable to water, said surface (20) comprising a large number of staples (18) made of a material comprising iron and driven into said surface (20) of the wooden piece (10), said staples having at least one prong (24, 26), and being distributed on said surface with a homogeneous density, whereby
the homogeneous density of staples (18) and the deepness of driving of the staples on said surface (20) in said wood piece (10) are adjusted to produce, by means of a chemical reaction between the water and the iron of the staples (18) when the water immerses said surface, a homogeneous ferrous oxide barrier (44) on and underneath said surface over a certain thickness into the wooden piece to protect the wooden piece against degradation caused by the presence of microorganisms in the water,
**characterized in that**:
i) the homogeneous density of staples (18) on said surface of the wooden post ranges between 2100 and 6000 staples per square meter; and
ii) the deepness of driving of staples (18) on said surface (20) in said wood piece (10) is given by the length of the prongs (24, 26), said length ranging between 25-50 mm.

8. The wooden piece of claim 7, wherein the staples are made of wire material comprising 90% iron.

9. The wooden piece of claim 7, wherein the staples are made of wire material having a diameter of 1.53 mm.

10. The wooden piece of claim 7, wherein the staples (18) comprise two-prong or single-prong staples.

11. The wooden piece of claim 7, wherein:
- said wooden piece (10) is a wooden post with circular cross section having a diameter of at least 18 cm; and
- the staples (18) comprise prongs having a length situated between 25 and 45 mm to adjust accordingly the predetermined deepness of driving of the staples (18) into said wooden piece (10).

12. The wooden piece of claim 7, wherein:
- said wooden piece (10) is a wooden post with square cross section having a side dimension of at least 12 cm;
- the staples (18) comprises prongs having a length situated between 25 and 50 mm to adjust accordingly the predetermined deepness of driving of the staples (18) into said wooden piece (10).

13. The wooden piece of claim 7, wherein the staples (18) are distributed on said surface (20) in accordance with a regular staggered or regular rectangular pattern.

14. The wooden piece of claim 7, wherein said staples (18) comprise prongs (24, 26) and linking members (28) between said prongs, wherein said staples (18) are driven in said surface (20) with the linking members (28) exposed at said surface (20) and extending generally horizontally, or vertically, or at an inclination with respect to said surface (20).

## Patentansprüche

1. Eine Methode, den Verfall eines Holzstückes, das sich unterhalb der Wasseroberfläche befindet, abzuschwächen, wobei der Verfall durch das Vorhandensein von Mikroorganismen im Wasser bedingt ist; Die Methode umfasst: Hineinschlagen einer großen Anzahl von Klammern (18) aus eisenhaltigem Material in die dem Wasser ausgesetzte Oberfläche des entsprechenden Holzstückes (10), wobei die Klammern mindestens einen Zacken (24, 26) haben und mit einer einheitlichen Dichte auf der genannten Oberflächte verteilt werden. Die einheitliche Dichte der Klammern (18) und die Tiefe, mit der die Klammern in die genannte Oberflächte (20) des entsprechenden Holzstückes (10) getrieben werden, sind dabei so angepasst, dass aufgrund einer chemischen Reaktion, zu der es zwischen dem Wasser und dem Eisen der Klammern (18) beim Eintauchen der Holzoberfläche in das Wasser kommt, eine homogene Eisenoxid-Barriere auf und unterhalb der genannten Oberfläche entsteht. Diese reicht eine gewisse Dicke in das Holzstück hinein und schützt es gegen den Verfall, der durch das Vorhandensein von Mikroorganismen im Wasser bedingt wird. Der Vorgang ist **dadurch gekennzeichnet, dass**:
1. sich die homogene Dichte der Klammern (18) auf der entsprechenden Oberflächte des Holzpfostens zwischen 2100 und 6000 Klammern pro Quadratmeter bewegt; und
2. die Tiefe, mit der die Klammern (18) in die genannte Oberflächte (20) des Holzstückes (10) hineingetrieben werden, durch die Länge der Zacken (24, 26), die sich zwischen 25-50mm bewegt, bestimmt wird.

2. Eine Methode, wie sie in Punkt 1 erläutert wird, bei der die Klammern aus einem Drahtmaterial mit 90% Eisenanteil hergestellt werden.

3. Eine Methode, wie sie in Punkt 1 erläutert wird, bei der die Klammern aus einem Drahtmaterial mit einem Durchmesser von 1.53 mm hergestellt werden.

4. Eine Methode, wie sie in Punkt 1 erläutert wird, wobei:
- das entsprechenden Holzstück (10) ein Holzpfosten ist, dessen Kreisquerschnitt einen Durchmesser von 18cm hat; und
- die Klammern (18) aus Zacken bestehen, die eine Länge zwischen 25-45 mm haben, um sich entsprechend der vorher festgelegten Tiefe, mit der die Klammern (18) in das entsprechende Holzstück (10) getrieben werden, anzupassen.

5. Eine Methode, wie sie in Punkt 1 erläutert wird, wobei:
- das entsprechenden Holzstück (10) ein Holzpfosten ist, dessen quadratischer Querschnitt eine Seitenlänge von mindestens 12 cm hat;
- die Klammern (18) aus Zacken bestehen, die eine Länge zwischen 25-50 mm haben, um sich entsprechend der vorher festgelegten Tiefe, mit der die Klammern (18) in das entsprechende Holzstück (10) getrieben werden, anzupassen.

6. Eine Methode, wie sie in Punkt 1 erläutert wird, bei der die Verteilung / Streuung der Klammern auf der genannten Oberfläche (20) einschließt, dass auf der genannten Oberfläche (20) eine regelmäßige versetzte oder regelmäßige rechteckige Struktur der Klammern entsteht.

7. Ein Holzstück (10), das für die Immersion ins Wasser geeignet und gegen den durch das Vorhandensein von Mikroorganismen im Wasser verursachten Verfall geschützt ist, hat eine Oberfläche, die dem Wasser ausgesetzt werden kann; diese Oberfläche (20) beinhaltet eine große Anzahl von Klammern aus einem eisenhaltigen Material, die in die genannte Oberfläche (20) des entsprechenden Holzstückes (10) getrieben werden, wobei die genannten Klammern mindestens einen Zacken (24, 26) haben und mit einer einheitlichen Dichte auf der genannten Oberflächte verteilt werden. Die einheitliche Dichte der Klammern (18) und die Tiefe, mit der die Klammern in die genannte Oberflächte (20) des entsprechenden Holzstückes (10) getrieben wurden, sind dabei so angepasst, dass aufgrund einer chemischen Reaktion, zu der es zwischen dem Wasser und dem Eisen der Klammern (18) beim Eintauchen der Holzoberfläche in das Wasser kommt, eine homogene Eisenoxid-Barriere auf und unterhalb der genannten Oberfläche entsteht. Diese reicht eine gewisse Dicke in das Holzstück hinein und schützt es gegen den Verfall, der durch das Vorhandensein von Mikroorganismen im Wasser bedingt wird. Der Vorgang ist **dadurch gekennzeichnet, dass**:
1. sich die homogene Dichte der Klammern (18) auf der entsprechenden Oberflächte des Holzpfostens zwischen 2100 und 6000 Klammern pro Quadratmeter bewegt; und
2. die Tiefe, mit der die Klammern (18) in die genannte Oberflächte (20) des Holzstückes (10) hineingetrieben werden, durch die Länge der Zacken (24, 26), die sich zwischen 25-50mm bewegt, bestimmt wird.

8. Das Holzstück nach Punkt 7, wobei die Klammern aus einem Drahtmaterial mit 90%igem Eisenanteil hergestellt werden.

9. Das Holzstück nach Punkt 7, wobei die Klammern aus einem Drahtmaterial mit einem Durchmesser von 1.53mm hergestellt werden.

10. Das Holzstück nach Punkt 7, wobei die Klammern (18) aus zweizackigen oder einzackigen Klammern bestehen.

11. Das Holzstücke nach Punkt 7, bei dem:
- das entsprechenden Holzstück (10) ein Holzpfosten ist, dessen Kreisquerschnitt einen Durchmesser von 18cm hat; und
- die Klammern (18) aus Zacken bestehen, die eine Länge zwischen 25-45 mm haben, um sich entsprechend der vorher festgelegten Tiefe, mit der die Klammern (18) in das entsprechende Holzstück (10) getrieben werden, anzupassen.

12. Das Holzstück nach Punkt 7, bei dem:
- das entsprechenden Holzstück (10) ein Holzpfosten ist, dessen quadratischer Querschnitt eine Seitenlänge von mindestens 12 cm hat;
- die Klammern (18) aus Zacken bestehen, die eine Länge zwischen 25-50 mm haben, um sich entsprechend der vorher festgelegten Tiefe, mit der die Klammern (18) in das entsprechende Holzstück (10) getrieben werden, anzupassen.

13. Das Holzstück nach Punkt 7, wobei die Klammern (18) entsprechend einer regelmäßigen versetzten oder regelmäßigen rechteckigen Struktur auf der genannten Oberfläche (20) verteilt sind.

14. Das Holzstück nach Punkt 7, wobei die genannten Klammern (18) Zacken (24, 26) haben und Elemente /Teile (28) zwischen den genannten Zacken verbinden. Dabei werden die Klammern (18) in die genannte Oberfläche (20) getrieben, wobei die verbundenen Elemente / Teile (28) an der genannten Oberfläche (20) freigelegt werden und sich in der Regel horizontal, vertikal oder mit einer in Bezug zur genannten Oberfläche (20) stehenden Neigung ausdehnen.

## Revendications

1. une méthode pour atténuer la dégradation d'une pièce en bois (10) immergée dans l'eau, où la dégradation est due à la présence de micro-organismes dans l'eau, la méthode comprenant : conduite sur une surface (20) exposables à eau de ladite pièce en bois (10) un grand nombre d'agrafes (18) fait d'un matériau composé de fer, staples a déclaré avoir au moins une dent (24 26) et distribué sur ladite surface avec une densité homogène, auquel cas la densité homogène des agrafes (18) et la profondeur de la conduite des agrafes sur dit surface (20) dans ladite pièce de bois (10) sont ajustés pour produire, au moyen d'une réaction chimique entre l'eau et le fer des agrafes (18) lorsque l'eau plonge dit surface , une barrière homogène oxyde ferreux (44) sur et sous ladite surface sur une certaine épaisseur dans la pièce en bois pour protéger le bois contre la dégradation causée par la présence de micro-organismes dans l'eau, **caractérisée en ce que** :
i) la densité homogène d'agrafes (18) sur ladite surface du poteau en bois varie entre 2100 et 6000 agrafes par mètre carré. et
ii) la profondeur de la conduite d'agrafes (18) sur ladite surface (20) dans ladite pièce de bois (10) est donnée par la longueur des broches (24, 26), dit longueur variant de 25 à 50 mm.

2. une méthode telle que définie dans la revendication 1, comprenant la fabrication des agrafes de matériel du fil composé de 90 % de fer.

3. une méthode telle que définie dans la revendication 1, comprenant la fabrication des agrafes de matériel du fil ayant un diamètre de 1,53 mm.

4. une méthode telle que définie en revendication 1, dans lequel :
- dit pièce en bois (10) est un poteau en bois à section circulaire d'un diamètre d'au moins 18 cm ; et
- les agrafes (18) comprennent les fourches ayant une longueur située entre 25 et 45 mm à ajuster en fonction de la profondeur prédéterminée d'enfoncer des agrafes (18) dans ladite pièce en bois (10).

5. une méthode telle que définie dans la revendication 1 dans lequel :
- dit pièce en bois (10) est un poteau en bois à section carrée ayant une dimension de côté d'au moins 12 cm ;
- les agrafes (18) se compose de dents ayant une longueur située entre 25 et 50 mm à ajuster en fonction de la profondeur prédéterminée d'enfoncer des agrafes (18) dans ladite pièce en bois (10).

6. une méthode telle que définie dans la revendication 1, dans lequel distribuant les agrafes dit surface (20) compose de formage sur ladite surface (20) un habitué décalé ou les habitudes rectangulaire d'agrafes.

7. une pièce en bois (10) appropriée pour l'immersion dans l'eau et protégée contre la dégradation causée par la présence de micro-organismes dans l'eau, comprenant une exposables à l'eau de surface (20), ladite surface (20) comprenant qu'un grand nombre d'agrafes (18) fait d'un matériau composé de fer et entraînée dans ladite surface (20) de la pièce en bois (10), a déclaré staples ayant au moins une dent (24 26) et distribué sur ladite surface avec une densité homogène, auquel cas la densité homogène des agrafes (18) et la profondeur de la conduite des agrafes sur dit surface (20) dans ladite pièce de bois (10) sont ajustés pour produire, au moyen d'une réaction chimique entre l'eau et le fer des agrafes (18) lorsque l'eau plonge dit surface , une barrière homogène oxyde ferreux (44) sur et sous ladite surface sur une certaine épaisseur dans la pièce en bois pour protéger le bois contre la dégradation causée par la présence de micro-organismes dans l'eau, **caractérisée en ce que** :
i) la densité homogène d'agrafes (18) sur ladite surface du poteau en bois varie entre 2100 et 6000 agrafes par mètre carré. et
ii) la profondeur de la conduite d'agrafes (18) sur ladite surface (20) dans ladite pièce de bois (10) est donnée par la longueur des broches (24, 26), dit longueur variant de 25 à 50 mm.

8. la pièce en bois de la revendication 7, dans laquelle les agrafes sont faits de matériel du fil composé de 90 % de fer.

9. la pièce en bois de la revendication 7, dans laquelle les agrafes sont faits de matériel du fil ayant un diamètre de 1,53 mm.

10. la pièce en bois de la revendication 7, dans laquelle les agrafes (18) comprennent deux broches ou single broches staples.

11. la pièce en bois de la revendication 7, dans lequel :
- dit pièce en bois (10) est un poteau en bois à section circulaire d'un diamètre d'au moins 18 cm ; et
- les agrafes (18) se compose de dents ayant une longueur située entre 25 et 45 mm à ajuster en fonction de la profondeur prédéterminée d'enfoncer des agrafes (18) dans ladite pièce en bois (10).

12. la pièce en bois de la revendication 7, dans lequel :
- dit pièce en bois (10) est un poteau en bois à section carrée ayant une dimension de côté d'au moins 12 cm ;
- les agrafes (18) se compose de dents ayant une longueur située entre 25 et 50 mm à ajuster en fonction de la profondeur prédéterminée d'enfoncer des agrafes (18) dans ladite pièce en bois (10).

13. la pièce en bois de la revendication 7, dans laquelle les agrafes (18) sont distribués sur dit surface (20) selon un modèle rectangulaire décalé ou régulier régulier.

14. la pièce en bois de la revendication 7, dans lequel dit staples (18) comprennent des broches (24, 26) et reliant les membres (28) entre ces tiges, dans laquelle ladite staples (18) sont conduits dit surface (20) avec le lien entre les membres (28) exposés à ladite surface (20) et qui s'étend généralement horizontalement ou verticalement, ou à une inclinaison par rapport à ladite surface (20).
